# EUROPEAN PATENT SPECIFICATION

(11) **EP 3 706 266 B1**
(45) Date of publication and mention of the grant of the patent: **05.06.2024**
(21) Application number: 19161393.4
(22) Date of filing: 07.03.2019
(51) Int. Cl.: H02B 3/00, G06N 3/08, G06V 10/143, G06V 10/764, G06V 10/82, G06N 3/047, G06N 3/045, G06N 3/04

(54) **ARTIFICIAL INTELLIGENCE MONITORING SYSTEM USING INFRARED IMAGES TO IDENTIFY HOTSPOTS IN A SWITCHGEAR**
KÜNSTLICHE INTELLIGENZ ÜBERWACHUNGSVORRICHTUNG MIT INFRAROTBILDERN ZÜR IDENTIFIKATION VON HOTSPOTS IN EINER SCHALTANLAGE
SYSTÈME DE SURVEILLANCE DE L'INTELLIGENCE ARTIFICIELLE UTILISANT DES IMAGES INFRAROUGES POUR IDENTIFIER DES POINTS CHAUDS DANS UN APPAREILLAGE DE COMMUTATION

(43) Date of publication of application: 09.09.2020
(73) Proprietor: ABB Schweiz AG, 5400 Baden (CH)
(72) Inventor: Gitzel, Ralf, 68165 Mannheim (DE); Schmidt, Benedikt, 69117 Heidelberg (DE); Subbiah, Subanatarajan, 68809 Neulußheim (DE)
(74) Representative: Maiwald GmbH

(56) References cited:
- EP-A2- 0 342 597
- WO-A1-2019/002507
- CN-A- 107 607 207
- CN-A- 107 680 195
- CN-A- 108 898 077
- US-A1- 2018 268 255
- US-A1- 2018 307 947
- BINHAI WANG ET AL: "SmartGuard: An autonomous robotic system for inspecting substation equipment", JOURNAL OF FIELD ROBOTICS, vol. 29, no. 1, 16 November 2011 (2011-11-16), pages 123-137, XP055471462, US ISSN: 1556-4959, DOI: 10.1002/rob.20423

## Description

### FIELD OF THE INVENTION

The present invention relates to an apparatus and system for monitoring a switchgear.

### BACKGROUND OF THE INVENTION

WO2019/002507A1 relates to a substation containing switchgear or controlgear with unmanned operation and maintenance. In order to proceed the operating and/or maintenance of such substations in an automized way, and just in case of further need of human operator, to enhance security for the human operator, it is described that the inner room is locked against the outer housing by an inner, automatically operated door, that a robot system is implemented in such, that the robot systems acting area is extended form in the inner room, partly in the area outside the inner room, but inside the outer housing, where spare parts are stored in a spare parts hand over area, for maintenance.

US2018/307947A1 Describes a system for unsupervised cross-domain image generation relative to a first and second image domain that each include real images. A first generator generates synthetic images similar to real images in the second domain while including a semantic content of real images in the first domain. A second generator generates synthetic images similar to real images in the first domain while including a semantic content of real images in the second domain. A first discriminator discriminates real images in the first domain against synthetic images generated by the second generator. A second discriminator discriminates real images in the second domain against synthetic images generated by the first generator. The discriminators and generators are deep neural networks and respectively form a generative network and a discriminative network in a cyclic GAN framework configured to increase an error rate of the discriminative network to improve synthetic image quality.

CN107680195A describes an assistant analysis system and method for intelligent robot patrol of substations. The assistant analysis system comprises an image shooting servo module, a deep-learning identification module and abnormal state inference module; the image shooting servo module is used for assisting an intelligent robot in shooting sample images and inputting the sample images to the deep-learning identification module; the deep-learning identification module is used for establishing three-level pattern identification systems for identifying equipment, parts and statuses respectively, and each pattern identification system is used for object identification of the sample images and inputting identification results to the image shooting servo module and the abnormal state inferencemodule; the abnormal state inference module is used for performing inference engine on equipment status information identified by the deep-learning identification module and displaying inference results to users. It is described that compared with a traditional characteristic-based image identification method, the assistant analysis method has the advantages of high accuracy and generalization capability.

CN107607207A relates to an electric equipment thermal fault diagnosis method and system and an electronic device. The method comprises the following steps: collecting an infrared image of electric equipment and constructing a convolutional neural network model on the basis of the infrared image; inputting a to-be-detected infrared image into the convolutional neural network model; identifying a temperature scale and electric equipment in the infrared image through the convolutional neural network model; generating an RGB value and temperature reference table on the basis of RGB values of pixels points of the identified temperature scale and upper and lower bounds of the temperature scale, extracting an RGB value of the identified electric equipment, comparing the extracted RGB value with RGB values in the RGB value and temperature reference table, and obtaining a temperature result of the identified electric equipment; carrying out diagnosis on the temperature result through a power grid system diagnosis standard, and determining whether thermal faults of the electric equipment occur. It is described that the electric equipment is identified in a highly efficient and accurate manner through the convolutional neural network model, the temperature is read accurately through the RGB value, and a power grid system is improved in intelligent level.

CN108898077A describes an infrared thermogram recognition method for electrical equipment and an infrared recognition system for electrical equipment. The method comprises: S1, collecting a pluralityof electrical equipment infrared thermograms containing electrical equipment to be identified through a thermal infrared imager, obtaining a training sample set; S2: performing enhancement processingand normalization processing on each electrical equipment infrared thermogram in the training sample set in sequence, respectively; S3, extracting electrical equipment infrared thermogram features of the preprocessed infrared thermogram, including image features and heat distribution features; S4: saving bottleneck features; S5: performing network optimization, obtaining the infrared thermogram as a probability threshold of the electrical equipment. It is described that compared with manual recognition, labeling, and naming of a large quantity of infrared electrical equipment, the method is based on high recognition rate of the electrical equipment infrared thermogram, and can be used for picture naming and defect diagnosis of a thermal infrared imager shooting site, and automatic analysis of electrical equipment states and abnormal situations in a later period, and that The method has high accuracy rate of identifying the electrical equipment in the infrared thermogram.

Switchgear failures due to hot spots with high temperatures can have dramatic consequences, for example, electric arcs / flash overs that can act almost like explosions. A method and associated system for monitoring and early warning before such incidents develop is highly needed and currently not available, in an affordable form, which could be installed as a standard in every switchgear and give enough information on the switchgear health state. Also, no method or system is available where images of a switchgear are acquired and transmitted for processing elsewhere in order to provide such monitoring and early warning. At the moment, using IR sensors to detect hot spots in circuit breakers, switchgear, and other electrical equipment requires a lot of very precise calibration to measure the temperature at exactly the right position. There is also an associated problem of identifying the right region in the IR image to monitor. A common solution for all switchgear and all circuit breakers within such switchgear is not possible because of different types and geometry.

There is a need to address these issues.

### SUMMARY OF THE INVENTION

Therefore, it would be advantageous to have an improved ability to monitor a switch gear.

The object of the present invention is solved with the subject matter of the independent claim, wherein further embodiments are incorporated in the dependent claims.

In a first aspect, there is provided an apparatus for monitoring a switchgear as defined in appended claim 1.

In a first example of the application, there is provided an apparatus for monitoring a switchgear, the apparatus comprising:
- an input unit;
- a processing unit; and
- an output unit.

The input unit is configured to provide the processing unit with a monitor infra-red image of a switchgear. The processing unit is configured to implement a machine learning classifier algorithm to analyse the monitor infra-red image and determine if there is one or more anomalous hot spots in the switchgear. The machine learning classifier algorithm has been trained on the basis of a plurality of training images, wherein the plurality of training images comprises at least one synthetic image generated by an image processing algorithm The output unit is configured to output information relating to the one or more anomalous hot spots.

In this manner, the apparatus can determine if there are hot spots in switchgear and other electrical components more accurately, because a large training set can be generated to improve the ability to determine if there are hot spots over a wider range of situations for different switchgears and without human intervention.

According to the invention, a Generative Adversarial Network is used to generate the at least one synthetic image.

According to the invention, the at least one synthetic image was generated on the basis of at least one real image of a switchgear.

According to the invention, the at least one real image comprises image data of at least one circuit breaker.

According to the invention, the at least one synthetic image comprises a plurality of different synthetic images.

In an example, the plurality of training images comprises at least one real infra-red image of a switchgear.

In an example, the at least one real infra-red image comprises a plurality of different real infra-red images. The number of synthetic images is greater than the number of real infra-red images.

In an example, the machine learning classifier algorithm is a neural network.

In an example, the neural network is a convolutional neural network.

In an example, the processing unit is configured to update the training of the machine learning classifier algorithm comprising utilisation of the monitor infra-red image.

In an example, the training update comprises a manual indication that the monitor infrared image comprises no anomalous hot spots or a manual indication that the monitor infra-red image comprises one or more anomalous hot spots.

In an example, the manual indication that the monitor infra-red image comprises one or more anomalous hot spots comprises a manual indication of one or more locations in the monitor infra-red image of the one or more anomalous hot spots.

In a second aspect, there is provided a system for monitoring a switchgear, the system comprising:
- an infra-red camera; and
- an apparatus for monitoring a switchgear according to the first aspect.

The infra-red camera is configured to acquire the monitor infra-red image of the switchgear.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic example relating to machine learning based on patterns; and
Fig. 2 shows a flow with respect to problems in data and solutions.

### DETAILED DESCRIPTION OF EMBODIMENTS

The apparatus and system enables to detect and identify hot spots in switchgear, for example in circuit breakers, and in other electrical equipment through infra-red imagery of this equipment. This is achieved through utilization of a machine learning classifier algorithm that has been trained on images, at least one of which is synthetically generated in order that the training set can be significant enough for the machine learning classifier algorithm to be able to identify hot spots in different equipment types, from different vantage points and in different situations.

Thus this is achieved by an apparatus that comprises an input unit, a processing unit, and an output unit. The input unit is configured to provide the processing unit with a monitor infra-red image of a switchgear. Thus, the apparatus can be operating in real time, where the input unit could for example be a camera or image sensor that can acquire single or several infra-red images and transmit this or these to the processing unit. Or the apparatus could operate in an off-line mode, where one or more images that has or have already been taken is then provided to the input unit and then transmitted to the processing unit for processing. In either situation, the processing unit is configured to implement a machine learning classifier algorithm to analyse the monitor infra-red image and determine if there is one or more anomalous hot spots in the switchgear. The machine learning classifier algorithm has been trained on the basis of a plurality of training images. The plurality of training images comprises at least one synthetic image generated by an image processing algorithm which is a Generative Adversarial Network. The output unit is configured to output information relating to the one or more anomalous hot spots.

According to the invention the at least one synthetic image comprises a plurality of different synthetic images generated on the basis of one real image.

According to the invention, the at least one synthetic image comprises a plurality of different synthetic images and the at least one real image comprises a plurality of different real images. The number of real images is less than the number of synthetic images.

According to invention, the at least one real image is an infra-red image.

According to an example, the plurality of training images comprises at least one real infra-red image of a switchgear.

According to the invention, the at least one synthetic images comprises a plurality of different synthetic images.

According to an example, the at least one real infra-red image comprises a plurality of different real infra-red images. The number of synthetic images is greater than the number of real infra-red images.

According to the invention, the at least one real infra-red image comprises image data of at least one circuit breaker.

According to the invention, the at least one synthetic image is at least one synthetic infra-red image of a switchgear.

According to the invention, the at least one synthetic image comprises image data of at least one circuit breaker.

According to the invention, the monitor infra-red image comprises image data of at least one circuit breaker.

According to an example, the machine learning classifier algorithm is a neural network.

According to an example, the neural network is a convolutional neural network.

According to an example, the processing unit is configured to update the training of the machine learning classifier algorithm comprising utilisation of the monitor infra-red image.

According to an example, the training update comprises a manual indication that the monitor infra-red image comprises no anomalous hot spots or a manual indication that the monitor infra-red image comprises one or more anomalous hot spots.

According to an example, the manual indication that the monitor infra-red image comprises one or more anomalous hot spots comprises a manual indication of one or more locations in the monitor infra-red image of the one or more anomalous hot spots. As discussed above, the apparatus can be part of a system that has a camera that acquires the monitor infra-red image and provides this to the processing unit, via the input unit.

Thus, the described apparatus and system provides a way to analyze the infra-red image as a whole without defining regions of interest. It specifically takes into account the fact that there are different circuit breaker geometries. For this purpose a machine learning classifier algorithm (e.g. a convolutional neural network) is used. The network is trained with real and artificial data produced by an image processing algorithm which is a Generative Adversarial Network (GAN). As a result, the expensive human intervention of either calibration or region definition is eliminated from the process.

Thus it is convenient to set the scene. There is currently a strong interest in using infrared data to assess a circuit breaker's health state, where hot spots are indicative of a problem and these hotspots are easy for a human to identify and interpret. However, using skilled technicians and engineers in this manner is very expensive. Machine learning algorithms are here utilised to achieve this without a human. However, machine learning algorithms require an extensive training dataset of relevant data, and this is difficult and expensive to provide. The apparatus and system described here addresses this situation.

Continuing with the situation prior to development of the described apparatus and system, existing solutions require a very precise calibration of the sensor to look at the right spot. This means that engineering cost is high. A solution that covers a larger area still requires a human to identify the right regions to look at.

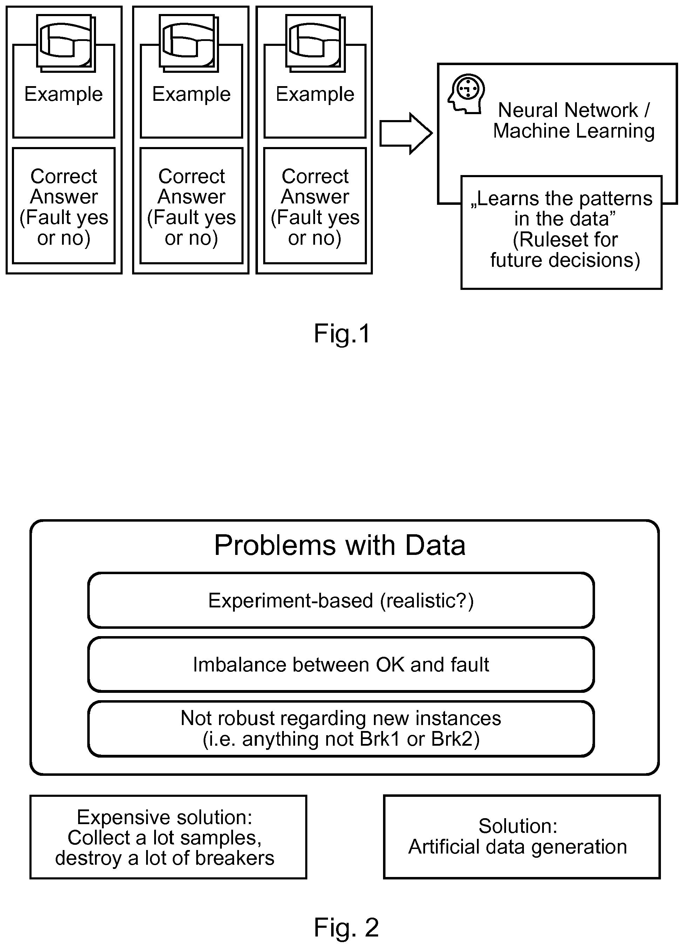

Regarding any generic solution that does not require identification of the right areas (e.g. based on a convolutional neural network), this needs to be robust against the differences in circuit breaker geometry and function to be useful. However, if the training network has never experienced certain situations, it is less likely to classify them correctly. The basic principle of Neural Network learning is shown in Fig. 1.

A conventional solution for the last point would be to use lots of training data from different circuit breakers.

Like a human, the Neural Network learns from experience and is better at judging situations identical or similar to what it has seen before. One way of addressing this is to use lots of training data from different circuit breakers. However, this is costly and advantages of not having to use a human will be eaten up by the additional data collection effort. Fig. 2 summarizes the problems of data when not using data generation and the two solutions - collect more and different data or generate data.

Thus, the surprising solution utilised in the apparatus and system described here involves the acquisition of additional data that is the synthetic generation of realistic data. Software that has some understanding as to what is a realistic image has been used to generate training data for the neural network that identifies if there are hot spots from imagery. With this additional data, the neural network is able to handle a wider range of situations.

Generative Adversarial Networks (GANs) are a new technology for the generation of data. One well-known example is their use for the generation of photorealistic images of human beings. The best of these images are indistinguishable from a real human portrait but show people that do not exist in real life. Even the inferior examples are still recognizable as faces.

Therefore, according to the invention, a GAN has been used to generate infra-red images of circuit breakers based on previous examples of real infra-red images of circuit breakers. Like the generation of photorealistic human faces discussed above, the synthetic images of the circuit breakers do not necessarily depict a functional circuit breaker, but creates images with features that look very much like that in a circuit breaker. These images are used to train another neural network (called a "classifier", which can recognize hot spots from infra-red imagery acquired from a circuit breaker being monitored. The classifier is now more robust towards different kinds of circuit breakers as input, and is also in general more accurate.

## Claims

1. An apparatus for monitoring a switchgear, the apparatus comprising:
- an input unit;
- a processing unit; and
- an output unit;
wherein, the input unit is configured to provide the processing unit with a monitor infra-red image of a switchgear;
wherein, the processing unit is configured to implement a machine learning classifier algorithm to analyse the monitor infrared image and determine if there is one or more anomalous hot spots in the switchgear;
wherein the monitor infra-red image comprises image data of one of a plurality of circuit breakers;
wherein, the machine learning classifier algorithm has been trained on the basis of a plurality of training images, wherein the plurality of training images comprises at least one synthetic infra-red image of a switchgear generated by an image processing algorithm, wherein the at least one synthetic infra-red image was generated by a Generative Adversarial Network on the basis of at least one real infra-red image of a switchgear, wherein the at least one real infra-red image comprises a plurality of different real infra-red images, wherein the different real infra-red image comprises image data of a plurality of circuit breakers, wherein the at least one synthetic infrared image comprises a plurality of different synthetic infra-red images, wherein the plurality of synthetic infra-red images comprises a plurality of synthetic infrared images of each of the circuit breakers, and wherein the number of the plurality of different real infra-red images is less than the number of the plurality of synthetic infra-red images; and
wherein, the output unit is configured to output information relating to the one or more anomalous hot spots.

2. Apparatus according to claim 1, wherein the plurality of training images comprises at least one real infra-red image of a switchgear.

3. Apparatus according to claim 2, wherein the at least one real infra-red image comprises a plurality of different real infra-red images, and wherein the number of synthetic infra-red images is greater than the number of real infra-red images.

4. Apparatus according to any of claims 1-3, wherein the machine learning classifier algorithm is a neural network.

5. Apparatus according to claim 4, wherein the neural network is a convolutional neural network.

6. Apparatus according to any of claims 1-5, wherein the processing unit is configured to update the training of the machine learning classifier algorithm comprising utilisation of the monitor infra-red image.

7. Apparatus according to claim 6, wherein the training update comprises a manual indication that the monitor infra-red image comprises no anomalous hot spots or a manual indication that the monitor infrared image comprises one or more anomalous hot spots.

8. Apparatus according to claim 7, wherein the manual indication that the monitor infra-red image comprises one or more anomalous hot spots comprises a manual indication of one or more locations in the monitor infra-red image of the one or more anomalous hot spots.

9. A system for monitoring a switchgear, the system comprising:
- an infra-red camera; and
- an apparatus for monitoring a switchgear according to any of claims 1-8; and
wherein, the infra-red camera is configured to acquire the monitor infra-red image of the switchgear.

## Patentansprüche

1. Vorrichtung zum Überwachen einer Schaltanlage, wobei die Vorrichtung Folgendes umfasst:
- eine Eingabeeinheit;
- eine Verarbeitungseinheit; und
- eine Ausgabeeinheit;
wobei die Eingabeeinheit konfiguriert ist, für die Verarbeitungseinheit ein Überwachungsinfrarotbild einer Schaltanlage bereitzustellen;
die Verarbeitungseinheit konfiguriert ist, einen Klassifikatoralgorithmus für maschinelles Lernen zu implementieren, um das Überwachungsinfrarotbild zu analysieren und zu bestimmen, ob ein oder mehrere anomale Hotspots in der Schaltanlage vorliegen;
das Überwachungsinfrarotbild Bilddaten eines von mehreren Leistungsschaltern umfasst;
der Klassifikatoralgorithmus für maschinelles Lernen auf der Grundlage von mehreren Trainingsbildern trainiert wurde, wobei die mehreren Trainingsbilder mindestens ein synthetisches Infrarotbild einer Schaltanlage, das durch einen Bildverarbeitungsalgorithmus erzeugt wird, umfassen, wobei das mindestens eine synthetische Infrarotbild durch ein generatives kontradiktorisches Netz auf der Grundlage mindestens eines realen Infrarotbilds einer Schaltanlage erzeugt wurde, das mindestens eine reale Infrarotbild mehrere verschiedene reale Infrarotbilder umfasst, die verschiedenen realen Infrarotbilder Bilddaten von mehreren Leistungsschaltern umfassen, das mindestens eine synthetische Infrarotbild mehrere verschiedene synthetische Infrarotbilder umfasst, die mehreren synthetischen Infrarotbilder mehrere synthetische Infrarotbilder jedes der Leistungsschalter umfassen und die Anzahl der mehreren verschiedenen realen Infrarotbilder kleiner als die Anzahl der mehreren synthetischen Infrarotbilder ist; und die Ausgabeeinheit konfiguriert ist, Informationen auszugeben, die sich auf den einen oder die mehreren anomalen Hotspots beziehen.

2. Vorrichtung nach Anspruch 1, wobei die mehreren Trainingsbilder mindestens ein reales Infrarotbild einer Schaltanlage umfassen.

3. Vorrichtung nach Anspruch 2, wobei das mindestens eine reale Infrarotbild mehrere verschiedene reale Infrarotbilder umfasst und die Anzahl von synthetischen Infrarotbildern größer als die Anzahl von realen Infrarotbildern ist.

4. Vorrichtung nach einem der Ansprüche 1-3, wobei der Klassifikatoralgorithmus für maschinelles Lernen ein neuronales Netz ist.

5. Vorrichtung nach Anspruch 4, wobei das neuronale Netz ein neuronales Faltungsnetz ist.

6. Vorrichtung nach einem der Ansprüche 1-5, wobei die Verarbeitungseinheit konfiguriert ist, das Training des Klassifikatoralgorithmus für maschinelles Lernen, das eine Nutzung des Überwachungsinfrarotbilds umfasst, zu aktualisieren.

7. Vorrichtung nach Anspruch 6, wobei die Trainingsaktualisierung eine manuelle Angabe, dass das Überwachungsinfrarotbild keine anomalen Hotspots umfasst, oder eine manuelle Angabe, dass das Überwachungsinfrarotbild einen oder mehrere anomale Hotspots umfasst, umfasst.

8. Vorrichtung nach Anspruch 7, wobei die manuelle Angabe, dass das Überwachungsinfrarotbild einen oder mehrere anomale Hotspots umfasst, eine manuelle Angabe eines oder mehrerer Orte im Überwachungsinfrarotbild des einen oder der mehreren anomalen Hotspots umfasst.

9. System zum Überwachen einer Schaltanlage, wobei das System Folgendes umfasst:
- eine Infrarotkamera; und
- eine Vorrichtung zum Überwachen einer Schaltanlage nach einem der Ansprüche 1-8;
wobei die Infrarotkamera konfiguriert ist, das Überwachungsinfrarotbild der Schaltanlage zu erfassen.

## Revendications

1. Appareil destiné à surveiller un appareillage de commutation, l'appareil comprenant :
- une unité d'entrée ;
- une unité de traitement ; et
- une unité de sortie ;
dans lequel l'unité d'entrée est configurée pour fournir à l'unité de traitement une image infrarouge de surveillance d'un appareillage de commutation ;
dans lequel l'unité de traitement est configurée pour mettre en œuvre un algorithme de classification à apprentissage automatique pour analyser l'image infrarouge de surveillance et déterminer s'il y a un ou plusieurs points chauds anormaux dans l'appareillage de commutation ;
dans lequel l'image infrarouge de surveillance comprend des données d'image de l'un d'une pluralité de disjoncteurs ;
dans lequel l'algorithme de classification à apprentissage automatique a été entraîné sur la base d'une pluralité d'images d'entraînement, dans lequel la pluralité d'images d'entraînement comprend au moins une image infrarouge de synthèse d'un appareillage de commutation générée par un algorithme de traitement d'images, dans lequel l'au moins une image infrarouge de synthèse a été générée par un réseau antagoniste génératif sur la base d'au moins une image infrarouge réelle d'un appareillage de commutation, dans lequel l'au moins une image infrarouge réelle comprend une pluralité d'images infrarouges réelles différentes, dans lequel les différentes images infrarouges réelles comprennent des données d'image d'une pluralité de disjoncteurs, dans lequel l'au moins une image infrarouge de synthèse comprend une pluralité d'images infrarouges de synthèse différentes, dans lequel la pluralité d'images infrarouges de synthèse comprend une pluralité d'images infrarouges de synthèse de chacun des disjoncteurs, et dans lequel le nombre de la pluralité d'images infrarouges réelles différentes est inférieur au nombre de la pluralité d'images infrarouges de synthèse ; et dans lequel l'unité de sortie est configurée pour délivrer des informations concernant le ou les points chauds anormaux.

2. Appareil selon la revendication 1, dans lequel la pluralité d'images d'entraînement comprend au moins une image infrarouge réelle d'un appareillage de commutation.

3. Appareil selon la revendication 2, dans lequel l'au moins une image infrarouge réelle comprend une pluralité d'images infrarouges réelles différentes, et dans lequel le nombre d'images infrarouges de synthèse est supérieur au nombre d'images infrarouges réelles.

4. Appareil selon l'une quelconque des revendications 1 à 3, dans lequel l'algorithme de classification à apprentissage automatique est un réseau neuronal.

5. Appareil selon la revendication 4, dans lequel le réseau neuronal est un réseau neuronal convolutif.

6. Appareil selon l'une quelconque des revendications 1 à 5, dans lequel l'unité de traitement est configurée pour actualiser l'entraînement de l'algorithme de classification à apprentissage automatique comprenant l'utilisation de l'image infrarouge de surveillance.

7. Appareil selon la revendication 6, dans lequel l'actualisation de l'entraînement comprend une indication manuelle que l'image infrarouge de surveillance ne comprend pas de points chauds anormaux ou une indication manuelle que l'image infrarouge de surveillance comprend un ou plusieurs points chauds anormaux.

8. Appareil selon la revendication 7, dans lequel l'indication manuelle que l'image infrarouge de surveillance comprend un ou plusieurs points chauds anormaux comprend une indication manuelle d'un ou plusieurs emplacements dans l'image infrarouge de surveillance du ou des points chauds anormaux.

9. Système destiné à surveiller un appareillage de commutation, le système comprenant :
- une caméra infrarouge ; et
- un appareil destiné à surveiller un appareillage de commutation selon l'une quelconque des revendications 1 à 8 ; et
dans lequel la caméra infrarouge est configurée pour acquérir l'image infrarouge de surveillance de l'appareillage de commutation.
